# EUROPEAN PATENT SPECIFICATION

(11) **EP 3 689 644 B1**
(45) Date of publication and mention of the grant of the patent: **18.08.2021**
(21) Application number: 20153177.9
(22) Date of filing: 22.01.2020
(51) Int. Cl.: B60C 11/13, B60C 11/04

(54) **TIRE**
REIFEN
PNEUMATIQUE

(30) Priority: 25.01.2019 JP 2019011514
(43) Date of publication of application: 05.08.2020
(73) Proprietor: Sumitomo Rubber Industries, Ltd., Kobe-shi, Hyogo-ken 651-0072 (JP)
(72) Inventor: HOSODA, Yasuhiro, Kobe-shi, Hyogo 651-0072 (JP)
(74) Representative: Manitz Finsterwald Patent- und Rechtsanwaltspartnerschaft mbB

(56) References cited:
- EP-A2- 1 216 853
- CN-A- 104 108 290
- JP-A- H04 274 906
- US-A1- 2001 054 464

## Description

### BACKGROUND OF THE INVENTION

### Field of the Invention

The present invention relates to a tire, and specifically to a tire that is capable of preventing stone trapping into a groove.

### Description of the Background Art

Japanese Laid-Open Patent Publication No. 2018-134915 proposes a tire in which projections for preventing stone trapping are disposed in crown main grooves.

As the volumes of the projections are larger, better anti-stone trapping performance can be exhibited. However, if the volumes of the projections are large, the drainage performance of the crown main grooves tends to decrease. Therefore, there is room for further enhancement in improving anti-stone trapping performance without impairing wet performance.

A tire according to the preamble of claim 1 is known from US 2001/054464 A1.

Further tires having projections on the groove bottom surface are known from EP1 216 853 A1, JP H04 274906 A and CN 104 108 290 A.

### SUMMARY OF THE INVENTION

The present invention has been made in view of the above-described circumstances, and a main object of the present invention is to provide a tire that is capable of improving anti-stone trapping performance without impairing wet performance.

The present invention is a tire in which a groove is formed in a tread portion. The groove has a groove bottom. At least one projection portion projecting in a tire radial direction is formed on the groove bottom. The projection portion has side surfaces extending outward in the tire radial direction from the groove bottom, and an outer surface which is contiguous with the side surfaces and which faces outward in the tire radial direction. The projection portion has therein a thin groove portion opened in the outer surface, and a hollow portion which is contiguous with an inner side in the tire radial direction of the thin groove portion and which has a larger width than the thin groove portion.

In the tire according to the present invention, the groove is preferably a main groove extending in a tire circumferential direction.

In the tire according to the present invention, the groove is preferably a lateral groove extending in a tire axial direction.

In the tire according to the present invention, the side surfaces preferably include a first circumferential end surface and a second circumferential end surface extending in a width direction of the main groove, and the hollow portion is preferably opened in the first circumferential end surface or the second circumferential end surface.

In the tire according to the present invention, the hollow portion preferably penetrates from the first circumferential end surface to the second circumferential end surface.

In the tire according to the present invention, an area of a transverse cross section, of the hollow portion, that is orthogonal to the main groove preferably varies in a length direction of the main groove.

In the tire according to the present invention, the hollow portion preferably includes a narrowed portion at which the area becomes minimum, and, in the hollow portion, the area preferably gradually increases from the narrowed portion toward at least one side in the tire circumferential direction.

In the tire according to the present invention, the thin groove portion is preferably opened in the first circumferential end surface or the second circumferential end surface.

In the tire according to the present invention, the thin groove portion preferably extends linearly in the outer surface.

In the tire according to the present invention, the thin groove portion preferably extends zigzag in the outer surface.

In the tire according to the present invention, a maximum width of the hollow portion is preferably 0.30 to 0.45 times a maximum width of the projection portion.

In the tire according to the present invention, a maximum height of the hollow portion is preferably 0.30 to 0.50 times a maximum height of the projection portion.

The present invention is a tire in which the groove is formed in the tread portion. The groove has the groove bottom. The at least one projection portion projecting in the tire radial direction is formed on the groove bottom. The projection portion has the side surfaces extending outward in the tire radial direction from the groove bottom, and the outer surface which is contiguous with the side surfaces and which faces outward in the tire radial direction. The projection portion has therein the thin groove portion opened in the outer surface, and the hollow portion which is contiguous with the inner side in the tire radial direction of the thin groove portion and which has a larger width than the thin groove portion.

The projection portion allows suppression of entry of foreign objects such as stones into the groove, whereby anti-stone trapping performance can be exhibited. In addition, the thin groove portion allows, during running on a wet road, water having entered the groove to be guided into the hollow portion while maintaining the rubber volume and the rigidity of the projection portion. Further, the thin groove portion and the hollow portion serve to maintain the volume of the groove, whereby wet performance can be maintained.

### BRIEF DESCRIPTION OF THE DRAWINGS

FIG. 1 is a transverse cross-sectional view of a tread portion of a tire according to one embodiment of the present invention;
FIG. 2 is an enlarged perspective view of a projection portion in FIG. 1;
FIG. 3 is an enlarged cross-sectional view of the projection portion in FIG. 2;
FIG. 4 is an enlarged perspective view of a projection portion in another embodiment of the present invention; and
FIG. 5 is an enlarged perspective view of a projection portion of a tire of a Comparative Example.

### DESCRIPTION OF THE PREFERRED EMBODIMENTS

Hereinafter, one embodiment of the present invention will be described with reference to the drawings.

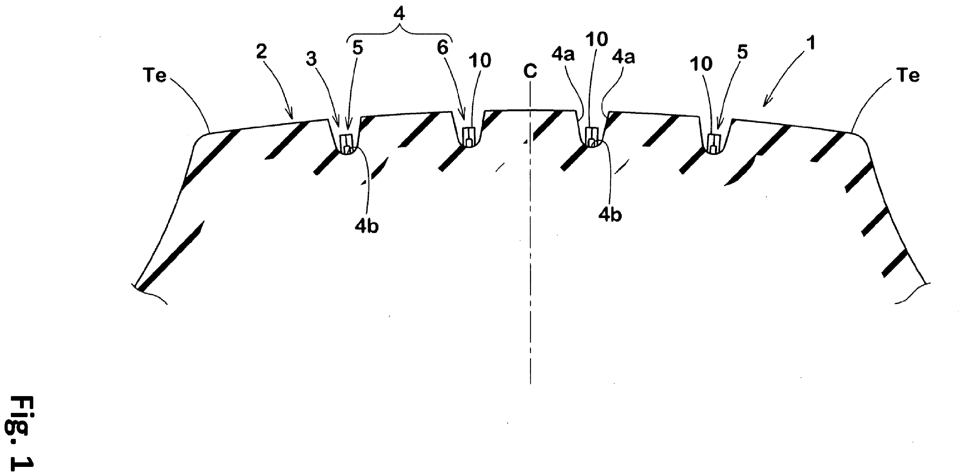

FIG. 1 is a transverse cross-sectional view of a tread portion 2 of a tire 1 according to the present embodiment. FIG. 1 is a cross-sectional view of the tire 1 in a normal state, along a meridian that includes the tire rotation axis. The tire 1 according to the present embodiment is suitably used as, for example, a heavy-duty pneumatic tire. However, the tire 1 according to the present invention is not limited to such use, and may be used as, for example, a tire for passenger cars.

The "normal state" refers to a state where the tire is mounted to a normal rim and inflated to a normal internal pressure, and no load is applied to the tire. Hereinafter, unless otherwise specified, the dimensions and the like of components of the tire are values measured in the normal state.

The "normal rim" refers to a rim that is defined, in a standard system including a standard on which the tire is based, by the standard for each tire, and is, for example, the "Standard Rim" in the JATMA standard, the "Design Rim" in the TRA standard, or the "Measuring Rim" in the ETRTO standard.

The "normal internal pressure" refers to an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, grooves 3 are formed in the tread portion 2 of the tire 1. The grooves 3 are implemented in the following mode. A plurality of main grooves 4 extending in the tire circumferential direction are formed in the tread portion 2 in the present embodiment. The main grooves 4 include shoulder main grooves 5 which are formed closest to tread ends Te, and crown main grooves 6 which are formed closer to the tire equator C than the shoulder main grooves 5 are. It is noted that, in the present specification, the grooves 3 include not only the main grooves 4 extending in the tire circumferential direction but also lateral grooves extending in the tire axial direction.

The tread ends Te are ground contact positions at the outermost sides in the tire axial direction when a normal load is applied to the tire 1 in the normal state and the tire 1 is brought into contact with a flat surface at a camber angle of 0°.

The "normal load" refers to a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

Each main groove 4 has a pair of groove walls 4a and a groove bottom 4b. At least one projection portion 10 projecting in the tire radial direction is formed on the groove bottom 4b of the main groove 4.

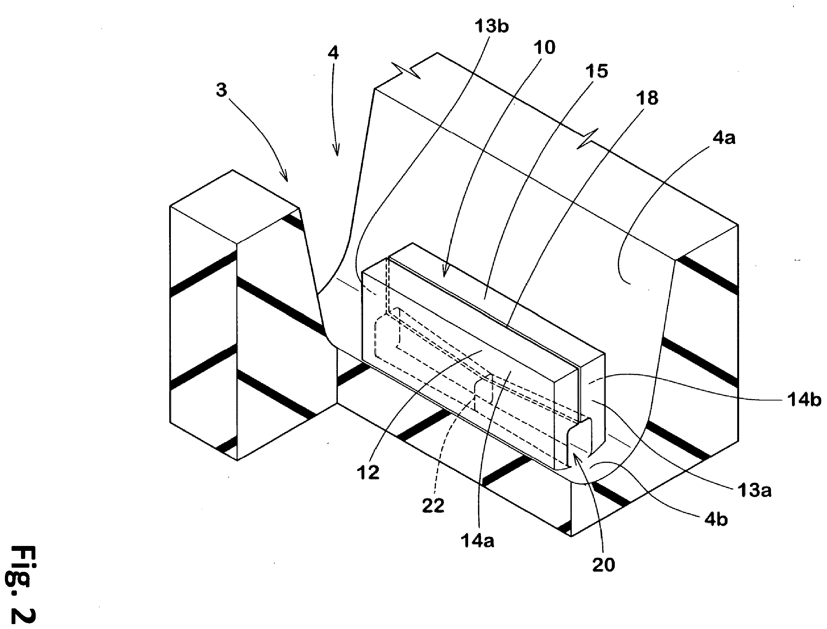

FIG. 2 is an enlarged perspective view of the projection portion 10. As shown in FIG. 2, the projection portion 10 has side surfaces 12 extending outward in the tire radial direction, and an outer surface 15 which is contiguous with the side surfaces 12 and which faces outward in the tire radial direction.

The projection portion 10 has therein a thin groove portion 18 opened in the outer surface 15, and a hollow portion 20 which is contiguous with the inner side in the tire radial direction of the thin groove portion 18 and which has a larger width (width in a direction that is orthogonal to the main groove 4) than the thin groove portion 18.

The projection portion 10 allows suppression of entry of foreign objects such as stones into the corresponding groove, whereby anti-stone trapping performance can be exhibited. Especially, since the projection portion 10 having therein the thin groove portion 18 is suitably deformed when the tire rolls, even if foreign objects enter between the projection portion 10 and the groove walls 4a of the main groove 4, the foreign objects can be easily removed.

In addition, the thin groove portion 18 allows, during running on a wet road, water having entered the corresponding groove to be guided into the hollow portion 20 while maintaining the rubber volume and the rigidity of the projection portion 10. Further, the thin groove portion 18 and the hollow portion 20 serve to maintain the volume of the groove, whereby wet performance can be maintained. Therefore, the tire according to the present invention allows improvement in the anti-stone trapping performance without impairing wet performance as compared to a tire in which no projections are disposed in grooves.

In the present embodiment, the above-described projection portion 10 is formed in each main groove 4. However, the present invention is not limited to this mode, and the projection portion 10 may be disposed in, for example, each lateral groove extending in the tire axial direction.

The side surfaces 12 include, for example, a first circumferential end surface 13a and a second circumferential end surface 13b, and a first axial end surface 14a and a second axial end surface 14b. The first circumferential end surface 13a and the second circumferential end surface 13b are located respectively on one side and the other side in the tire circumferential direction of the projection portion 10, and extend in the width direction of the main groove 4. The first axial end surface 14a and the second axial end surface 14b are located respectively on one side and the other side in the tire axial direction of the projection portion 10, and extend in the length direction of the main groove 4.

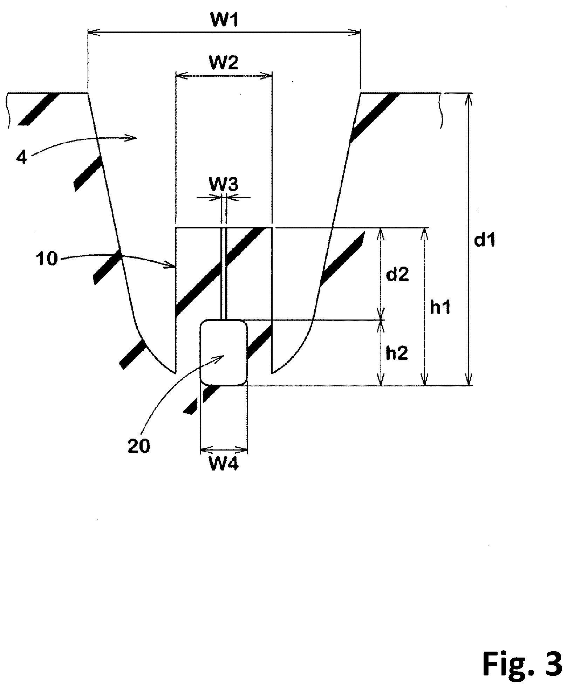

FIG. 3 is an enlarged cross-sectional view of the projection portion 10. As shown in FIG. 3, the maximum width W2 of the projection portion 10 is, for example, preferably 0.20 to 0.40 times the width W1 of the main groove 4. The maximum height hi in the tire radial direction of the projection portion 10 is, for example, preferably 0.15 to 0.60 times the depth d1 of the main groove 4. The length, in the length direction of the main groove 4, of the projection portion 10 is, for example, preferably 5.0 to 30.0 mm. However, the size of the projection portion 10 is not limited to this mode.

As shown in FIG. 2, the thin groove portion 18 extends linearly in the outer surface 15. The thin groove portion 18 is preferably opened in, for example, at least one of the first circumferential end surface 13a and the second circumferential end surface 13b. The thin groove portion 18 in the present embodiment extends from the first circumferential end surface 13a to the second circumferential end surface 13b. Such a thin groove portion 18 serves to improve the wet performance.

The thin groove portion 18 in the present embodiment is opened neither in the first axial end surface 14a nor in the second axial end surface 14b, for example. Such a thin groove portion 18 serves to maintain the rigidity of the projection portion 10 and exhibit excellent anti-stone trapping performance. However, the present invention is not limited to this mode.

As shown in FIG. 3, the width W3 of the thin groove portion 18 is, for example, not greater than 2.0 mm and preferably 0.5 to 1.5 mm. The depth d2 of the thin groove portion 18 is, for example, preferably 0.50 to 0.70 times the height hi of the projection portion 10. Such a thin groove portion 18 allows the wet performance and the anti-stone trapping performance to be improved in a well-balanced manner.

As shown in FIG. 2, the hollow portion 20 is opened in, for example, at least one of the first circumferential end surface 13a and the second circumferential end surface 13b. In a preferable mode, the hollow portion 20 penetrates from the first circumferential end surface 13a to the second circumferential end surface 13b. The projection portion 10 having such a hollow portion 20 allows improvement in the anti-stone trapping performance without hindering movement of water in the corresponding groove and without impairing the wet performance.

The hollow portion 20 in the present embodiment is opened neither in the first axial end surface 14a nor in the second axial end surface 14b, for example. Such a hollow portion 20 serves to maintain the rigidity of the projection portion 10 and exhibit excellent anti-stone trapping performance. However, the present invention is not limited to this mode.

As shown in FIG. 3, the hollow portion 20 preferably has a rectangular shape with arc-shaped corner portions in a transverse cross section that is orthogonal to the main groove 4. The maximum width W4 of the hollow portion 20 is, for example, preferably 0.30 to 0.45 times the maximum width W2 of the projection portion 10. The maximum height h2 of the hollow portion 20 is, for example, preferably 0.30 to 0.50 times the maximum height hi of the projection portion 10. The radius of curvature of each corner portion is, for example, preferably 0.1 to 2.0 mm.

As shown in FIG. 2, the area of a transverse cross section, of the hollow portion 20, that is orthogonal to the main groove 4 preferably varies in the length direction of the main groove 4. The hollow portion 20 in the present embodiment includes a narrowed portion 22 at which the aforementioned area becomes minimum. In the hollow portion 20, the aforementioned area gradually increases from the narrowed portion 22 toward at least one side in the tire circumferential direction. Such a hollow portion 20 allows, during running on a wet road, water having entered the hollow portion 20 to be pushed out and removed owing to deformation of the projection portion 10, whereby the wet performance can be further improved.

In order to further enhance the above-described advantageous effects, in a more preferable mode, the narrowed portion 22 of the hollow portion 20 is formed at a center portion, in the length direction of the main groove 4, of the projection portion 10. In the hollow portion 20, the aforementioned area gradually increases from the narrowed portion 22 toward both sides in the tire circumferential direction.

The width of the narrowed portion 22 is, for example, preferably 0.50 to 0.80 times the maximum width of the hollow portion 20. The height of the narrowed portion 22 is, for example, preferably 0.50 to 0.80 times the maximum height of the hollow portion 20. With such a hollow portion 20, the above-described advantageous effects can be expected while a sufficient volume is ensured.

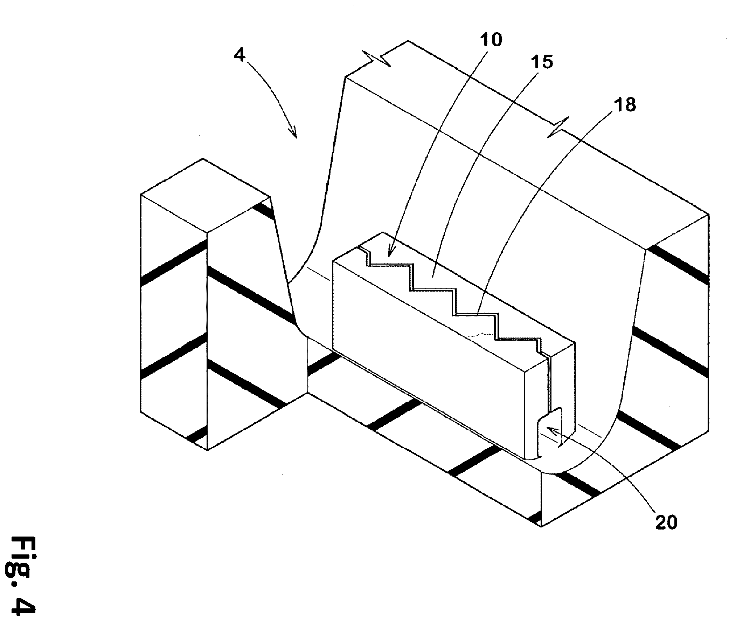

FIG. 4 is an enlarged perspective view of a projection portion 10 in another embodiment of the present invention. Elements that are common to the above-described embodiment are denoted by the same reference characters, and the description thereof is omitted. As shown in FIG. 4, the thin groove portion 18 extends zigzag in the outer surface 15 in the present embodiment. Such a thin groove portion 18 serves to suppress deformation of the projection portion 10 when being closed, and improve the anti-stone trapping performance.

If the zigzag width of the thin groove portion 18 is small, the above-described advantageous effects may not be exhibited. If the zigzag width of the thin groove portion 18 is large, the rigidity of the projection portion 10 tends to decrease. From these viewpoints, the zigzag width of the thin groove portion 18 is, for example, preferably 0.30 to 0.40 times the width of the projection portion 10.

The tire according to the present invention can be implemented at least by hand-cutting the tread portion in which no groove has not been formed yet. In addition, in the above-described embodiments, the thin groove portion 18 and the hollow portion 20 can be formed in the projection portion 10 through a known vulcanization molding method.

Although the tire according to each embodiment of the present invention has been described in detail above, the present invention is not limited to the above specific embodiments, and various modifications can be made to implement the present invention within the scope of the appended claims.

### EXAMPLES

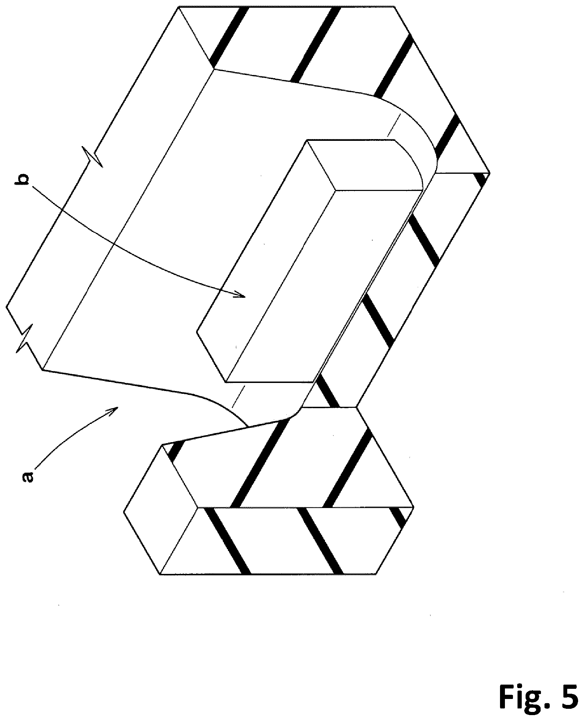

Heavy-duty pneumatic tires with a size of 315/80R22.5 each having the projection portion shown in FIG. 2 or FIG. 4 were produced as test tires based on specifications indicated in Table 1. A tire of a Comparative Example in which a projection portion b having therein no thin groove portion or hollow portion was formed in a main groove a as shown in FIG. 5, was produced as a test tire. The tire of the Comparative Example is substantially the same as the tires of Examples, except for the above-described configuration. Each test tire was tested for wet performance and anti-stone trapping performance. The specifications that are common to the test tires, and test methods, are as described below.
Tire-mounted rim: 22.5×8.25
Tire internal pressure: 720 kPa
Test vehicle: A truck with a weight limit of 10 t, in which a cargo having a weight that was 50% of the standard load capacity was carried on the front side of the cargo bed.
Tire-mounted position: All wheels

### <Wet Performance>

The aforementioned test vehicle was caused to run on a wet road surface with a water depth of 0.5 to 2.0 mm at a speed of 65±2 km and was suddenly braked, and the braking distance was measured. The result is indicated as an index with the braking distance of the Comparative Example being regarded as 100, and a smaller numeric value indicates better wet performance.

### <Anti-Stone Trapping Performance>

The aforementioned test vehicle was caused to run on a gravel road for a certain distance, and the number of stones having entered the grooves was measured. The result is indicated as an index with the number of such stones in the Comparative Example being regarded as 100, and a smaller numeric value indicates better anti-stone trapping performance.

The test results are indicated in Table 1.

**[Table 1]**

| | Comparative Example | Example 1 | Example 2 | Example 3 | Example 4 | Example 5 | Example 6 | Example 7 |
|---|---|---|---|---|---|---|---|---|
| Drawing showing projection portion | FIG. 5 | FIG. 2 | FIG. 2 | FIG. 2 | FIG. 2 | FIG. 2 | FIG. 2 | FIG. 4 |
| Width W4 of hollow portion/ width W2 of projection portion | - | 0.40 | 0.30 | 0.45 | 0.40 | 0.40 | 0.40 | 0.40 |
| Height h2 of hollow portion/ height h1 of projection portion | - | 0.40 | 0.40 | 0.40 | 0.30 | 0.50 | 0.40 | 0.40 |
| Presence/absence of narrowed portion | - | Present | Present | Present | Present | Present | Absent | Present |
| Anti-stone trapping performance (index) | 100 | 97 | 97 | 99 | 97 | 98 | 96 | 95 |
| Wet performance (index) | 100 | 84 | 89 | 84 | 91 | 83 | 87 | 86 |

As a result of the tests, it has been confirmed that, as compared to the tire of the Comparative Example provided with the conventional projection portion, the tire of each Example has substaintially same level of anti-stone trapping performance and has improved wet performance.

## Claims

1. A tire (1) in which a groove (3) is formed in a tread portion (2), wherein
the groove (3) has a groove bottom (4b),
at least one projection portion (10) projecting in a tire radial direction is formed on the groove bottom (4b),
the projection portion (10) has side surfaces (12) extending outward in the tire radial direction from the groove bottom (4b), and an outer surface (15) which is contiguous with the side surfaces (12) and which faces outward in the tire radial direction, and
the projection portion (10) has therein a thin groove portion (18) opened in the outer surface (15), the tire is **characterized by**
a hollow portion (20) which is contiguous with an inner side in the tire radial direction of the thin groove portion (18) and which has a larger width than the thin groove portion (18).

2. The tire (1) according to claim 1, wherein
the groove (3) is a main groove (4) extending in a tire circumferential direction.

3. The tire (1) according to claim 1, wherein
the groove (3) is a lateral groove extending in a tire axial direction.

4. The tire (1) according to claim 2, wherein
the side surfaces (12) include a first circumferential end surface (13a) and a second circumferential end surface (13b) extending in a width direction of the main groove (4), and
the hollow portion (20) is opened in the first circumferential end surface (13a) or the second circumferential end surface (13b).

5. The tire (1) according to claim 4, wherein
the hollow portion (20) penetrates from the first circumferential end surface (13a) to the second circumferential end surface (13b).

6. The tire (1) according to claim 5, wherein
an area of a transverse cross section, of the hollow portion (20), that is orthogonal to the main groove (4) varies in a length direction of the main groove (4).

7. The tire (1) according to claim 6, wherein
the hollow portion (20) includes a narrowed portion (22) at which the area becomes minimum, and,
in the hollow portion (20), the area gradually increases from the narrowed portion (22) toward at least one side in the tire circumferential direction.

8. The tire (1) according to any one of claims 4 to 7, wherein
the thin groove portion (18) is opened in the first circumferential end surface (13a) or the second circumferential end surface (13b).

9. The tire (1) according to any one of claims 1 to 8, wherein
the thin groove portion (18) extends linearly in the outer surface (15).

10. The tire (1) according to any one of claims 1 to 8, wherein
the thin groove portion (18) extends zigzag in the outer surface (15).

11. The tire (1) according to any one of claims 1 to 10, wherein
a maximum width (W4) of the hollow portion (20) is 0.30 to 0.45 times a maximum width (W2) of the projection portion (10).

12. The tire (1) according to any one of claims 1 to 11, wherein
a maximum height (h2) of the hollow portion (20) is 0.30 to 0.50 times a maximum height (h1) of the projection portion (10).

## Patentansprüche

1. Reifen (1), bei dem eine Rille (3) in einem Laufflächenabschnitt (2) ausgebildet ist, wobei
die Rille (3) einen Rillengrund (4b) aufweist,
mindestens ein Vorsprungabschnitt (10), der in einer radialen Richtung des Reifens vorsteht, am Rillengrund (4b) ausgebildet ist,
der Vorsprungabschnitt (10) Seitenflächen (12), die sich von dem Rillengrund (4b) in der radialen Richtung des Reifens nach außen erstrecken, und eine Außenfläche (15) aufweist, die an die Seitenflächen (12) angrenzt und in der radialen Richtung des Reifens nach außen weist, und
der Vorsprungabschnitt (10) darin einen dünnen Rillenabschnitt (18) aufweist, der in der Außenfläche (15) geöffnet ist,
wobei der Reifen **gekennzeichnet ist durch**
einen hohlen Abschnitt (20), der an eine Innenseite in der radialen Richtung des Reifens des dünnen Rillenabschnitts (18) angrenzt und der eine größere Breite als der dünne Rillenabschnitt (18) aufweist.

2. Reifen (1) nach Anspruch 1, wobei die Rille (3) eine Hauptrille (4) ist, die sich in einer Umfangsrichtung des Reifens erstreckt.

3. Reifen (1) nach Anspruch 1, wobei die Rille (3) eine Querrille ist, die sich in einer axialen Richtung des Reifens erstreckt.

4. Reifen (1) nach Anspruch 2, wobei
die Seitenflächen (12) eine erste Umfangsendfläche (13a) und eine zweite Umfangsendfläche (13b) umfassen, die sich in einer Breitenrichtung der Hauptrille (4) erstrecken, und
der hohle Abschnitt (20) in der ersten Umfangsendfläche (13a) oder der zweiten Umfangsendfläche (13b) geöffnet ist.

5. Reifen (1) nach Anspruch 4, wobei der hohle Abschnitt (20) von der ersten Umfangsendfläche (13a) zu der zweiten Umfangsendfläche (13b) durchdringt.

6. Reifen (1) nach Anspruch 5, wobei eine Fläche eines Querschnitts des hohlen Abschnitts (20), die orthogonal zu der Hauptrille (4) ist, in einer Längsrichtung der Hauptrille (4) variiert.

7. Reifen (1) nach Anspruch 6, wobei
der hohle Abschnitt (20) einen verengten Abschnitt (22) umfasst, an dem die Fläche minimal wird, und,
in dem hohlen Abschnitt (20) die Fläche von dem verengten Teil (22) zu mindestens einer Seite in der Umfangsrichtung des Reifens allmählich zunimmt.

8. Reifen (1) nach einem der Ansprüche 4 bis 7, wobei der dünne Rillenabschnitt (18) in der ersten Umfangsendfläche (13a) oder der zweiten Umfangsendfläche (13b) geöffnet ist.

9. Reifen (1) nach einem der Ansprüche 1 bis 8, wobei sich der dünne Rillenabschnitt (18) in der Außenfläche (15) gerade erstreckt.

10. Reifen (1) nach einem der Ansprüche 1 bis 8, wobei der dünne Rillenabschnitt (18) sich in der Außenfläche (15) zickzackförmig erstreckt.

11. Reifen (1) nach einem der Ansprüche 1 bis 10, wobei eine maximale Breite (W4) des hohlen Abschnitts (20) das 0,30- bis 0,45-fache einer maximalen Breite (W2) des Vorsprungabschnitts (10) beträgt.

12. Reifen (1) nach einem der Ansprüche 1 bis 11, wobei eine maximale Höhe (h2) des hohlen Abschnitts (20) das 0,30- bis 0,50-fache einer maximalen Höhe (h1) des Vorsprungabschnitts (10) beträgt.

## Revendications

1. Pneumatique (1) dans lequel une rainure (3) est formée dans une partie bande de roulement (2), dans lequel
la rainure (3) présente un fond de rainure (4b),
au moins une partie en saillie (10) faisant saillie dans une direction radiale du pneumatique est formée sur le fond de rainure (4b),
la partie en saillie (10) présente des surfaces latérales (12) s'étendant vers l'extérieur dans la direction radiale du pneumatique à partir du fond de rainure (4b) et une surface extérieure (15) qui est contiguë aux surfaces latérales (12) et qui est tournée vers l'extérieur dans la direction radiale du pneumatique, et
la partie en saillie (10) présente à l'intérieur une partie rainure mince (18) ouverte dans la surface extérieure (15),
le pneumatique étant **caractérisé par**
une partie creuse (20) qui est contiguë à un côté intérieur dans la direction radiale du pneumatique de la partie rainure mince (18) et qui a une plus grande largeur que la partie rainure mince (18).

2. Pneumatique (1) selon la revendication 1, dans lequel
la rainure (3) est une rainure principale (4) s'étendant dans une direction circonférentielle du pneumatique.

3. Pneumatique (1) selon la revendication 1, dans lequel
la rainure (3) est une rainure latérale s'étendant dans une direction axiale du pneumatique.

4. Pneumatique (1) selon la revendication 2, dans lequel
les surfaces latérales (12) incluent une première surface d'extrémité circonférentielle (13a) et une seconde surface d'extrémité circonférentielle (13b) s'étendant dans une direction de largeur de la rainure principale (4), et
la partie creuse (20) est ouverte dans la première surface d'extrémité circonférentielle (13a) ou la seconde surface d'extrémité circonférentielle (13b).

5. Pneumatique (1) selon la revendication 4, dans lequel
la partie creuse (20) pénètre de la première surface d'extrémité circonférentielle (13a) à la seconde surface d'extrémité circonférentielle (13b).

6. Pneumatique (1) selon la revendication 5, dans lequel
une aire d'une section transversale de la partie creuse (20), qui est orthogonale à la rainure principale (4), varie dans une direction de longueur de la rainure principale (4).

7. Pneumatique (1) selon la revendication 6, dans lequel
la partie creuse (20) inclut une partie rétrécie (22) au niveau de laquelle l'aire devient minimale, et,
dans la partie creuse (20), l'aire augmente progressivement de la partie rétrécie (22) vers au moins un côté dans la direction circonférentielle du pneumatique.

8. Pneumatique (1) selon l'une quelconque des revendications 4 à 7, dans lequel
la partie rainure mince (18) est ouverte dans la première surface d'extrémité circonférentielle (13a) ou la seconde surface d'extrémité circonférentielle (13b).

9. Pneumatique (1) selon l'une quelconque des revendications 1 à 8, dans lequel
la partie rainure mince (18) s'étend linéairement dans la surface extérieure (15).

10. Pneumatique (1) selon l'une quelconque des revendications 1 à 8, dans lequel
la partie rainure mince (18) s'étend en zigzag dans la surface extérieure (15).

11. Pneumatique (1) selon l'une quelconque des revendications 1 à 10, dans lequel
une largeur maximale (W4) de la partie creuse (20) est de 0,30 à 0,45 fois une largeur maximale (W2) de la partie en saillie (10).

12. Pneumatique (1) selon l'une quelconque des revendications 1 à 11, dans lequel
une hauteur maximale (h2) de la partie creuse (20) est de 0,30 à 0,50 fois une hauteur maximale (h1) de la partie en saillie (10).
